# EUROPÄISCHE PATENTANMELDUNG

(11) **EP 3 533 731 A1**
(43) Veröffentlichungstag der Anmeldung: **04.09.2019**
(21) Anmeldenummer: 18159622.2
(22) Anmeldetag: 02.03.2018
(51) Int. Cl.: B65G 13/071, B65G 13/10

(54) **SCHRÄGFÖRDERER**

(71) Anmelder: Siemens Aktiengesellschaft, 80333 München (DE)
(72) Erfinder: VITALINI, Dr. Michele, 90475 Nürnberg (DE)
(74) Vertreter: Maier, Daniel Oliver

(57) **Zusammenfassung**

Existierende Transportrollen-Schrägförderer weisen meist nur eine geringe Flexibilität und/oder komplizierte Antriebe auf. Die Erfindung offenbart einen Transportrollen (12) und Antriebsrollen (14) umfassenden Schrägförderstreckenabschnitt (6) und ein Verfahren zum Transport von Stückgütern (4). Die Transportrollen (12) sind schräg auf dem Schrägförderstreckenabschnitt (6) ausgerichtet und definieren so die Vorzugstransportrichtung (8). Der Schrägförderstreckenabschnitt (6) ist daher ausgestaltet, die Stückgüter (4) stromaufwärts an einer ersten Stelle (10a) auf einer ersten Seite (S1) aufzunehmen, entlang einer Vorzugstransportrichtung (8) zu transportieren und stromabwärts an einer stromabwärts der ersten Stelle (10a) angeordneten, zweiten Stelle (10b) von einer der ersten Seite (S1) gegenüberliegenden zweiten Seite (S2) abzugeben. Die Transportrollen (12) sind hintereinander angeordnet und drehbar gelagert. Die Antriebsrollen (14) sind ansteuerbar und antreibbar und unterhalb der Transportrollen (12) angeordnet, so dass die Transportrollen (12) durch die Antriebsrollen (14) über Reibkontakt antreibbar sind. So wird eine hohe Flexibilität in sowohl der Anordnung der Transportrollen, als auch eine Unabhängigkeit von Länge (L), Breite (B) und einem durch die Vorzugstransportrichtung definierten Schrägwinkel (θ) erzielt.

## Beschreibung

Die vorliegende Erfindung betrifft das technische Gebiet der Fördersysteme zum Transport von Stückgütern, insbesondere Transportrollen umfassende Fördersysteme, die ein gerichtetes Fördern von Stückgütern erlauben.

Eine herkömmliche Komponente in der Fördertechnik ist eine angetriebenen Rollenbahn. Diese kommt in verschiedenen Ausführungsformen vor: gerade, mit schräg gestellten Transportrollen, als Fischgrat oder auch als Kurve. Je nach Ausführung werden verschiedene Antriebstechnologien verwendet: Übertragung von Transportrolle zu Transportrolle mit O-Ringen oder Zahnriemen, von unten an die Transportrollen angepresste Riemen oder Ketten.

Bei derart angetriebenen Rollenbahnen weisen stets alle Transportrollen entlang der gesamten Förderlänge die gleiche Geschwindigkeit auf. Darüber hinaus treten Übertragungs- und Rotationsprobleme auf die Transportrollen auf. Besonders bei schräg zu einer Geradeaus-Transportrichtung angeordneten Transportrollen ist die Bewegungsübertragung kompliziert und teilweise schwer auf Transportrollen am Anfang und Ende eines Förderabschnitts zu übertragen, so dass kombinierte Techniken verwendet werden müssen. Wenn nur ein zentraler Antrieb für die gesamte Rollenbahn herangezogen wird, erfolgt eine Übertragung des Drehmoments von Transportrolle zu Transportrolle, beispielsweise über Riemen oder O-Ringe. Dies erfordert kostenintensive Sonderanfertigungen. Bei gleicher Anordnung der Förderrichtungen von dem von unten an die Transportrollen angepressten Riemen und den von diesem Riemen angetriebenen Transportrollen ist auch der Platz begrenzt und die Transportrollen erstrecken sich nicht über die gesamte Breite des Fördersystems. Ein gerader Abschluss am Anfang und Ende der Rollenbahn ist erforderlich. Die Breite der Rollenbahn ist limitiert, da eine enge Abhängigkeit zwischen Schrägwinkel zu Breite und Länge existiert.

Es gibt auch andere Lösungen, eine hohe Flexibilität ist beispielsweise mit Kugelrollenförderern mit individuellem Antrieb erzielbar, allerdings sind diese Lösungen technisch kompliziert in Aufbau, Wartung und Betrieb.

Der vorliegenden Erfindung liegt daher die Aufgabe zugrunde, ein verbessertes Fördersystem bereitzustellen, insbesondere für Schrägförderer. Diese Aufgabe wird durch die in den unabhängigen Ansprüchen beschriebenen Lösungen gelöst.

Die erfindungsgemäße Lösung sieht ein Fördersystem zum Transport von Stückgütern, umfassend einen Schrägförderstreckenabschnitt, vor. Der Schrägförderstreckenabschnitt weist eine erste Seite und eine zweite Seite auf, wobei die erste und die zweite Seite einander gegenüberliegen. Der Schrägförderstreckenabschnitt weist eine Vorzugstransportrichtung auf, welche eine Längskomponente entlang den Seiten und eine Querkomponente von der ersten Seite hin zur zweiten Seite aufweist. Der Schrägförderstreckenabschnitt ist ausgestaltet, die Stückgüter stromaufwärts an einer ersten Stelle auf der ersten Seite aufzunehmen, entlang der Vorzugstransportrichtung zu transportieren und stromabwärts an einer stromabwärts der ersten Stelle angeordneten zweiten Stelle von der zweiten Seite abzugeben. Der Schrägförderstreckenabschnitt umfasst Transportrollen und Antriebsrollen. Die Transportrollen sind hintereinander angeordnet und drehbar gelagert. Die Antriebsrollen sind ansteuerbar und antreibbar und sind unterhalb der Transportrollen angeordnet, so dass die Transportrollen durch die Antriebsrollen über Reibkontakt antreibbar sind. Die Transportrollen sind schräg auf dem Schrägförderstreckenabschnitt ausgerichtet, so dass die Vorzugstransportrichtung des Schrägförderstreckenabschnitts mit einer Vorzugstransportrichtung der Transportrollen übereinstimmt.

Dass die Vorzugstransportrichtung des Schrägförderstreckenabschnitts mit einer Vorzugstransportrichtung der Transportrollen übereinstimmt bedeutet, dass die Drehachse der Transportrolle orthogonal zur Vorzugsrichtung angeordnet ist.

Unter der Längskomponente der Vorzugstransportrichtung soll eine Geradeaus-Transportrichtung des Förderstreckenabschnitts entlang den Seiten verstanden werden.

Die Antriebsrollen können individuell und toleranzenunabhängig an die Transportrollen angepresst werden. Darüber hinaus sind Antriebsrollen typischerweise günstiger als vergleichbare angetriebene Transportrollen mit vergleichbarem Drehmoment.

Unter Stückgütern sollen insbesondere Pakete, Päckchen und Postsendungen, sowie Gepäckstücke verstanden werden, aber auch andere kommissionierbare Güter können unter diesen Begriff fallen. Einsatzgebiet ist somit insbesondere ein Poststrecken-Fördersystem oder eine Flughafen-Gepäckförderanlage.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um Stückgüter zu vereinzeln, zu beschleunigen und/oder abzubremsen, während sie gleichzeitig seitlich transportiert werden, können die Antriebsrollen individuell ansteuerbar und antreibbar ausgestaltet sein. So kann eine Funktionsvereinigung des Schrägförderstreckenabschnitts erreicht werden, durch die weitere, ansonsten notwendige Komponenten des Fördersystems (Vereinzelungsvorrichtung, Beschleunigungsstrecken) einsparbar sind.

Um eine noch größere Individualität der Antriebsrollen und somit noch bessere Möglichkeiten der Manipulation beim Transport der Stückgüter zu ermöglichen, kann jede Antriebsrolle einen eigenen Antrieb aufweisen.

Gemäß einer Ausführungsform kann der Antrieb als Rollenmotor ausgestaltet sein.

Gemäß einer weiteren Ausführungsform können bezogen auf eine Länge ihrer Drehachsen die Antriebsrollen kürzer ausgestaltet sein als die Transportrollen. Dadurch kann ein Einbau der Antriebsrollen sehr flexibel und raumsparend ausgeführt werden.

Um einen besonders effizienten Antrieb zu ermöglichen, können die Antriebsrollen einen größeren und/oder kleineren und/oder gleich großen Durchmesser als die Transportrollen aufweisen. Durch den größeren Durchmesser wird das benötigte Antriebsdrehmoment im Vergleich zu einem in den Transportrollen angeordneten Antrieb verringert. Ein Faktor X zwischen den Durchmessern erfordert den gleichen Faktor X weniger Antriebsdrehmoment im Vergleich zu einem Antrieb in den Transportrollen. Antriebsrollen mit kleineren Durchmessern hingegen können besonders gut in eine Lücke zwischen zwei Transportrollen hineingepresst werden. Antriebsrollen mit gleich großen Durchmessern wie die Transportrollen sind ein guter Kompromiss zwischen optimiertem Antriebsdrehmoment und Größe der Antriebsrollen.

Gemäß einer weiteren Ausführungsform können die Antriebsrollen hintereinander und/oder versetzt entlang dem Schrägförderstreckenabschnitt angeordnet sein. Dies bedeutet, dass jede Antriebsrolle beliebig entlang des Schrägförderstreckenabschnitts positionierbar ist und frei justiert werden kann, was eine erhebliche Flexibilität bei sowohl der möglichen Anordnung der Transportrollen, als auch der möglichen spezifischen Ausgestaltung und/oder Anordnung der Transportrollen mit sich bringt. So können auch schwer erreichbare Transportrollen angetrieben werden.

Um die Anzahl an Antriebsrollen niedrig zu halten und somit Kosten zu sparen, kann eine Antriebsrolle so angeordnet sein, dass sie sich in Reibkontakt mit zwei Transportrollen befindet. Dies kann erzielt werden, indem die eine Antriebsrolle in die Lücke unterhalb der zwei Transportrollen und an die Transportrollen gepresst wird.

Gemäß einer weiteren Ausführungsform kann das Fördersystem zudem eine Steuereinheit umfassen, die zur individuellen Ansteuerung der Antriebsrollen ausgestaltet ist.

Um einen Förderstreckenabschnitt großer Breite zu ermöglichen, kann der Schrägförderstreckenabschnitt im Wesentlichen über seine gesamte Länge und Breite von Transportrollen bedeckt sein. Dies bedeutet, dass sich die Transportrollen (gleicher und/oder unterschiedlicher Länge) im Wesentlichen von der ersten bis zur zweiten Seite und von der ersten bis zur zweiten Stelle durchgehend erstrecken und dass die Transportrollen den Schrägförderstreckenabschnitt somit im Wesentlichen durchgehend bedecken. Die Länge der Transportrollen nimmt hierbei zum Anfang und zum Ende des Schrägförderstreckenabschnitts hin ab. Derart ausgestaltet weist der Schrägförderstreckenabschnitt wenig Störkonturen auf und weniger Risiko im Vergleich zu Schrägförderstreckenabschnitte des Standes der Technik für ein Stückgut, an den Seiten des Schrägförderstreckenabschnitts runterzufallen. Außerdem eignet sich so der Schrägförderstreckenabschnitt besonders gut für breite Stückgüter.

Hinsichtlich eines Verfahrens wird die vorstehend genannte Aufgabe gelöst durch ein Verfahren zum Transportieren von Stückgütern auf einem Schrägförderstreckenabschnitt eines Fördersystems. Der Schrägförderstreckenabschnitt weist eine erste Seite und eine zweite Seite auf, wobei die erste und die zweite Seite einander gegenüberliegen. Der Schrägförderstreckenabschnitt weist eine Vorzugstransportrichtung auf, welche eine Längskomponente entlang den Seiten und eine Querkomponente von der ersten Seite hin zur zweiten Seite aufweist. Der Schrägförderstreckenabschnitt umfasst Transportrollen und Antriebsrollen. Die Transportrollen sind hintereinander angeordnet und drehbar gelagert. Die Antriebsrollen sind ansteuerbar und antreibbar und sind unterhalb der Transportrollen angeordnet, so dass die Transportrollen durch die Antriebsrollen über Reibkontakt antreibbar sind. Und die Transportrollen sind schräg auf dem Schrägförderstreckenabschnitt ausgerichtet, so dass die Vorzugstransportrichtung des Schrägförderstreckenabschnitts mit einer Vorzugstransportrichtung der Transportrollen übereinstimmt. Das Verfahren umfasst die Verfahrensschritte Aufnehmen eines Stückguts stromaufwärts an einer ersten Stelle des Schrägförderstreckenabschnitts auf der ersten Seite, Transportieren des Stückguts entlang der Vorzugstransportrichtung auf dem Schrägförderstreckenabschnitt und Abgeben des Stückguts stromabwärts an einer stromabwärts der ersten Stelle angeordneten zweiten Stelle des Schrägförderstreckenabschnitts von der zweiten Seite.

Gemäß einer Ausführungsform kann ein individuelles Ansteuern und Antreiben der Antriebsrollen mit voneinander abweichender Geschwindigkeit erfolgen.

Gemäß einer weiteren Ausführungsform kann Antreiben von zwei Transportrollen durch Antreiben einer Antriebsrolle erfolgen, beispielsweise indem sich eine Antriebsrolle in Reibkontakt mit zwei Transportrollen befindet.

Gemäß einer weiteren Ausführungsform können die Antriebsrollen hintereinander und/oder versetzt entlang dem Schrägförderstreckenabschnitt angeordnet sein.

Gemäß einer weiteren Ausführungsform kann ein Transportieren des Stückguts in frei wählbarer Transportrichtung vor dem Aufnehmen durch den Schrägförderstreckenabschnitt und ein Transportieren des Stückguts in frei wählbarer Transportrichtung nach dem Abgeben des Stückguts vom Schrägförderstreckenabschnitt erfolgen.

Ausführungsformen der Erfindung werden nachfolgend anhand der Figuren beispielsweise näher erläutert. Dabei zeigen:
- Figur 1: schematisch einen erfindungsgemäßen Schrägförderstreckenabschnitt;
- Figur 2: schematisch ein Fördersystem umfassend einen typischen Schrägförderstreckenabschnitt des Standes der Technik;
- Figur 3: ein erfindungsgemäßes Fördersystem in der Aufsicht;
- Figur 4: einen Querschnitt durch einen Schrägförderstreckenabschnitt;
- Figur 5: einen Schrägförderstreckenabschnitt in der Aufsicht mit eingezeichneten, aber unterhalb der Transportrollen angeordneten und somit in der Realität in dieser Ansicht nicht sichtbaren Antriebsrollensegmenten und Antriebsrollen;
- Figur 6: einen Schrägförderstreckenabschnitt in einer Ansicht wie in Figur 5, allerdings mit dreigeteilten Antriebsrollensegmenten;
- Figur 7+8: einen Schrägförderstreckenabschnitt in einer Ansicht wie in den Figuren 5 und 6 zur Illustration der erfindungsgemäßen Lösung gegenüber dem Stand der Technik.

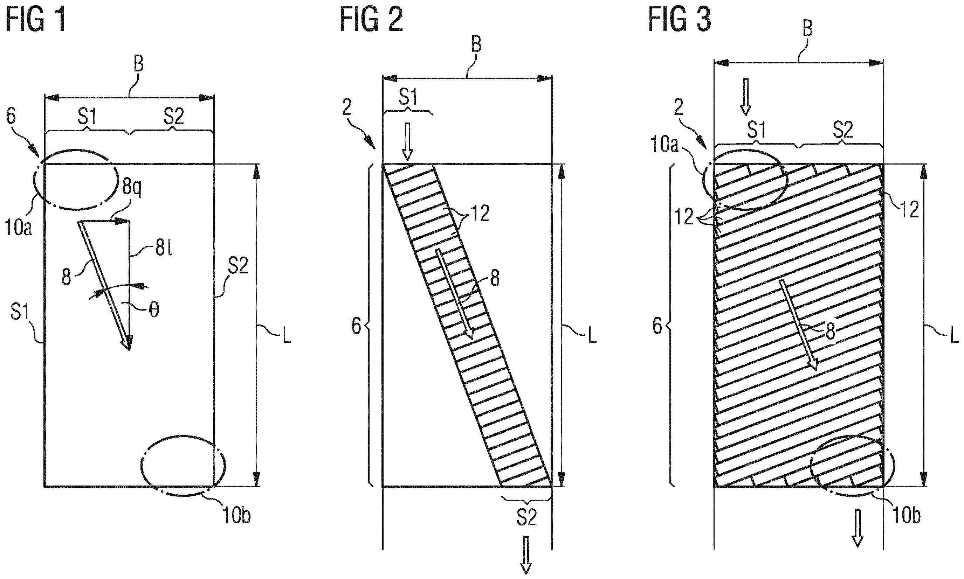

Figur 1 zeigt schematisch einen erfindungsgemäßen Schrägförderstreckenabschnitt 6 gemäß einer Ausführungsform der Erfindung. Der Schrägförderstreckenabschnitt 6 weist eine erste Seite S1 und eine der ersten Seite S1 gegenüberliegende zweite Seite S2 auf. Unter Seite S1, S2 soll hierbei nicht nur die Kante des Schrägförderstreckenabschnitts 6 verstanden werden, sondern zudem auch der links bzw. rechts einer Mitte des Schrägförderstreckenabschnitts 6 angeordnete Teilbereich des Schrägförderstreckenabschnitts 6. Stückgüter 4 können in beliebiger Transportrichtung hin zum Schrägförderstreckenabschnitt 6 transportiert werden. Der Schrägförderstreckenabschnitt 6 nimmt die Stückgüter 4 stromaufwärts an einer ersten Stelle 10a auf der ersten Seite S1 auf, transportiert die Stückgüter 4 entlang der Vorzugstransportrichtung 8 und gibt sie stromabwärts an einer stromabwärts der ersten Stelle 10a angeordneten zweiten Stelle 10b von der zweiten Seite S2 an das Fördersystem 2 ab. Die Stückgüter 4 können in beliebiger Transportrichtung weg vom Schrägförderstreckenabschnitt 6 transportiert werden. Für die Funktionalität des Schrägförderstreckenabschnitts 6 ist es unerheblich, in welcher Richtung ein Fördersystem 2, welches den Schrägförderstreckenabschnitt 6 umfasst, die Stückgüter 4 vor bzw. nach dem Schrägförderstreckenabschnitt 6 befördert. Die Vorzugstransportrichtung 8 weist eine Längskomponente 8l entlang den Seiten S1, S2 und eine Querkomponente 8q von der ersten Seite S1 hin zur zweiten Seite S2 auf. Stückgüter 4, die stromaufwärts eher mittig oder auf der zweiten Seite S2 in den Schrägförderstreckenabschnitt 6 eingebracht werden, können auch nur oder zumindest hauptsächlich entlang der Längskomponente 8l stromabwärts transportiert werden, hier wäre dann eine seitliche Begrenzung des Schrägförderstreckenabschnitt 6, beispielsweise in Form eines Abweisblechs, erforderlich, um ein Herunterfallen des Stückguts 4 zu verhindern.

Der Schrägförderstreckenabschnitt 6 hat eine definierte Breite B und eine definierte Länge L. Die Vorzugstransportrichtung 8 definiert einen Schrägwinkel θ, welcher von der Vorzugstransportrichtung 8 und Längskomponente 8l eingeschlossen wird. Hinsichtlich der Anordnung der Transportrollen 12 wird der Schrägwinkel θ von einer Transportrollen-Drehachse und der Querkomponente 8q der Vorzugstransportrichtung 8 eingeschlossen. Die Drehachse der Transportrolle 12 ist orthogonal zur Vorzugsrichtung angeordnet. Die Anordnung einer Transportrolle 12 bestimmt also ihre Vorzugstransportrichtung 8 und somit ihren Schrägwinkel θ. Die einzelnen Transportrollen 12 können, müssen aber nicht, die gleichen Schrägwinkel θ aufweisen. Ein Schrägwinkel θ=0° entspricht einem Geradeaus-Transport und ist eine mögliche Ausführungsform. Der Betrag der Vorzugstransportrichtung 8 stimmt dann mit der Längskomponente 8l überein. Je mindestens einer der Komponenten Länge L, Breite B, Schrägwinkel θ ist bei dem erfindungsgemäßen Schrägförderstreckenabschnitt 6 unabhängig voneinander einstellbar.

Figur 2 zeigt ein Fördersystem 2 umfassend einen typischen Schrägförderstreckenabschnitt 6 des Standes der Technik, welcher Transportrollen 12 aufweist. Nur ein schmaler Abschnitt des gesamten Schrägförderstreckenabschnitts 6 steht zum Transport zur Verfügung. Länge L, Breite B und Schrägwinkel θ können nicht unabhängig voneinander justiert werden. Zudem ist es nicht möglich, Stückgüter stromaufwärts auf der zweiten Seite S2 auf den Schrägförderstreckenabschnitt 6 einzubringen.

Figur 3 zeigt ein Fördersystem 2 in der Aufsicht gemäß einer weiteren Ausführungsform der Erfindung. Der Schrägförderstreckenabschnitt 6 umfasst Transportrollen 12 und unterhalb der Transportrollen 12 angeordnete, in der Aufsicht von Figur 3 nicht sichtbare Antriebsrollen 14 und ist im Wesentlichen über seine gesamte Länge L und Breite B von Transportrollen 12 bedeckt, also von der ersten bis hin zur zweiten Seite S1, S2 und von seinem Anfang stromaufwärts hin zu seinem Ende stromabwärts. Die im Bereich der ersten und zweiten Stelle 10a, 10b angeordneten Transportrollen 12 sind hinsichtlich der Länge entlang ihrer Drehachse kürzer als die Transportrollen 12 in der Mitte des Schrägförderstreckenabschnitts 6, um nicht über den Schrägförderstreckenabschnitt 6 hinaus zu ragen. Transportrichtungen des Fördersystems sind mit in allen Figuren mit Pfeilen angedeutet. Die Transportrollen 12 sind einzeln und unabhängig voneinander drehbar gelagert und sind somit entlang und/oder entgegen der Vorzugstransportrichtung 8 antreibbar.

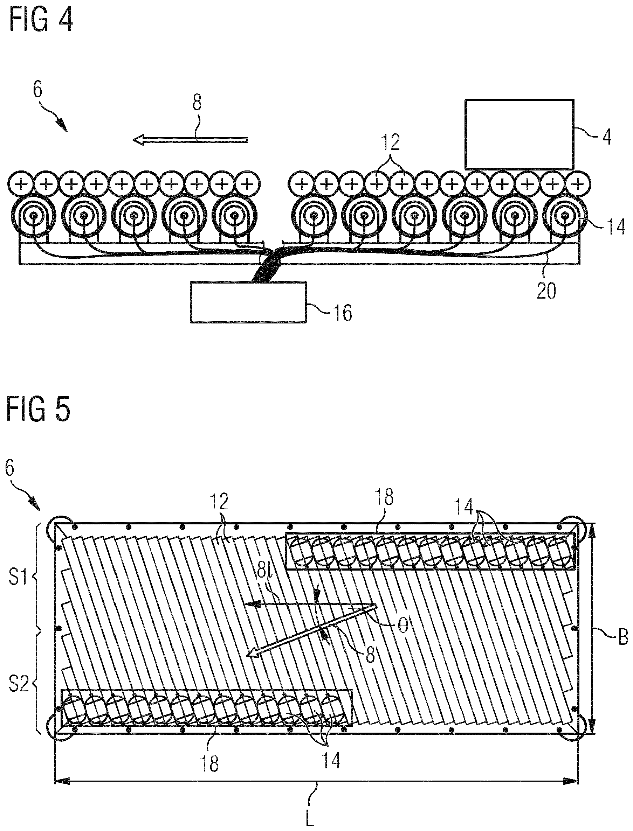

Figur 4 zeigt einen Querschnitt durch einen Schrägförderstreckenabschnitt 6 gemäß einer Ausführungsform der Erfindung. Ein Stückgut 4 liegt auf den Transportrollen 12 auf und wird entlang der Vorzugstransportrichtung 8 transportiert. Die Antriebsrollen 14 sind unterhalb der Transportrollen 12 positioniert und mit einer Steuereinheit 16, die als Versorgungs- und Kontrolleinheit agiert, verbunden. Jede Antriebsrolle ist individuell mit der Steuereinheit 16 verbunden und wird von dieser individuell versorgt, angesteuert und angetrieben. Jede Antriebsrolle 14 weist einen eigenen Antrieb auf, der beispielsweise als Rollenmotor ausgestaltet ist.

Durch das individuelle Antreiben sind Vereinzeln, Beschleunigen, Abbremsen und gleichzeitiges seitliches Transportieren gemeinsam durchführbar und es wird nicht zusätzlich zu einem einem Schrägförderer einen Förderstreckenabschnitt mit weiterer Funktionalität benötigt.

Die gezeigten Antriebsrollen 14 weisen etwa den doppelten Durchmesser der Transportrollen 12 auf, wodurch größere Motoren für die Antriebsrollen 14 möglich sind und somit bei gegebenem Durchmesser der Transportrollen 12 und gegebener Fördergeschwindigkeit ein kleineres Antriebsdrehmoment erzielt werden kann. Typische Durchmesser bei kleineren Stückgütern 4 der Transportrollen 12 sind etwa 30 mm und bei den Antriebsrollen 14 etwa 60 mm. Prinzipiell können die Antriebsrollen 14 jedoch auch den gleichen oder sogar einen geringeren Durchmesser als die Transportrollen 12 aufweisen. Die Antriebsrollen 14 werden jeweils nach oben in die Lücke zwischen zwei Transportrollen 12 gepresst, so dass eine effiziente Übertragung des Drehmoments sichergestellt wird. Die Antriebsrolle 14 steht in Reibkontakt mit zwei Transportrollen 12 und treibt diese an. Jede Antriebsrolle 14 kann individuell hinsichtlich ihres Anpressdrucks und ihrer genauen Positionierung justiert werden. Es ist jedoch auch möglich, mehrere Antriebsrollen gemeinsam als Segment zu justieren. Hierdurch wird der Montageaufwand verringert. Ebenfalls ist es möglich, dass eine Antriebsrolle 14 nur eine Transportrolle 12 antreibt.

Gemäß einer weiteren Ausführungsform weisen die Antriebsrollen 14 in etwa den gleichen Durchmesser wie die Transportrollen 12 auf. Gemäß noch einer weiteren Ausführungsform haben die Antriebsrollen 14 einen kleineren Durchmesser als die Transportrollen 12.

Gemäß noch einer Ausführungsform bestehen die Antriebe der Antriebsrollen 14 aus Rollenmotoren und sind mit der Steuereinheit 16 verbunden, deren Ausführung je nach Anwendung variiert. Es ist auch möglich, die Antriebsrollen 14 durch andere Ansteuerungs- und Versorgungssysteme, insbesondere anderweitig ausgestaltete Antriebe, zu versorgen und anzusteuern.

Figur 5 zeigt eine weitere Ausführungsform eines erfindungsgemäßen Schrägförderstreckenabschnitts 6 in Aufsicht. Die Antriebsrollen 14 sind zwar unterhalb der Transportrollen 12 positioniert und daher eigentlich nicht sichtbar, zum besseren Verständnis sind diese jedoch in der Ansicht der Figuren 5-8 sichtbar dargestellt. Hier sind die Antriebsrollen 14 in je dreizehn Antriebsrollen 14 umfassende Antriebssegmente 18 aufgeteilt, die am äußeren Rand der ersten bzw. zweiten Seite S1, S2 angeordnet sind. Die genaue Anzahl hängt ab von der gewünschten Breite B bzw. Länge L bzw. Schrägwinkel θ des Schrägförderstreckenabschnitts 6 sowie von dem Durchmessern der Transportrollen 12 und ihrem Abstand zueinander. Die Anordnung am äußeren Rand ist bei einem Schrägwinkel θ≠0° zumindest für die erste und die letzte Antriebsrolle 14 aufgrund der Kürze der in Stromrichtung ersten bzw. letzten Transportrolle 12 notwendig. Bei Transportrollen-Durchmessern von etwa 30 mm ergibt sich eine Länge L des Schrägförderstreckenabschnitts von 1,80 m bei einer Breite B von hier 0,8 m, wobei die Breite B bei gegebener Länge L in Abhängigkeit vom zu erzielenden Schrägwinkel θ beliebig anpassbar ist.

Die Zusammenfassung von Antriebsrollen 14 zu Antriebssegmenten 18 ist für das Funktionieren nicht erforderlich, es kann auch jede einzelne Antriebsrolle 14 an einer eigenen, von der benachbarten Antriebsrolle 14 abweichenden Position bezüglich der Breite B angeordnet sein. Oder die Antriebsrollen 14 werden in mehr als zwei Antriebssegmente 18 zusammengefasst und angeordnet.

Die Transportrollen 12 sind unmittelbar hintereinander angeordnet und drehbar gelagert und erstrecken sich im Wesentlichen über die gesamte Länge L und Breite B des Schrägförderstreckenabschnitts 6.

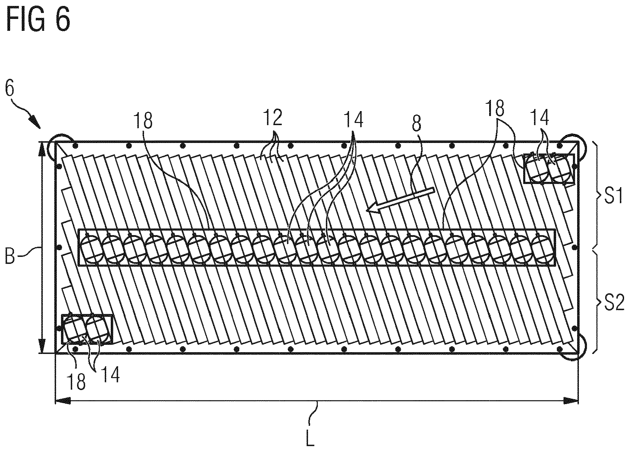

Figur 6 zeigt eine weitere Ausführungsform eines Schrägförderstreckenabschnitts 6 mit gleicher Länge L und Breite B wie in Figur 5, allerdings mit anderer Anordnung der Antriebssegmente 18. Je zwei Antriebsrollen 14 sind am äußeren Rand der ersten bzw. zweiten Seite S1, S2 angeordnet und ein 22 Antriebsrollen 14 umfassendes Antriebssegment 18 ist mittig angeordnet. Allgemein können die Antriebsrollen 14 beliebig unterhalb der Transportrollen 12 angeordnet werden: einzeln oder zu mehreren in Antriebssegmenten 18, in einer Linie hintereinander oder auch versetzt.

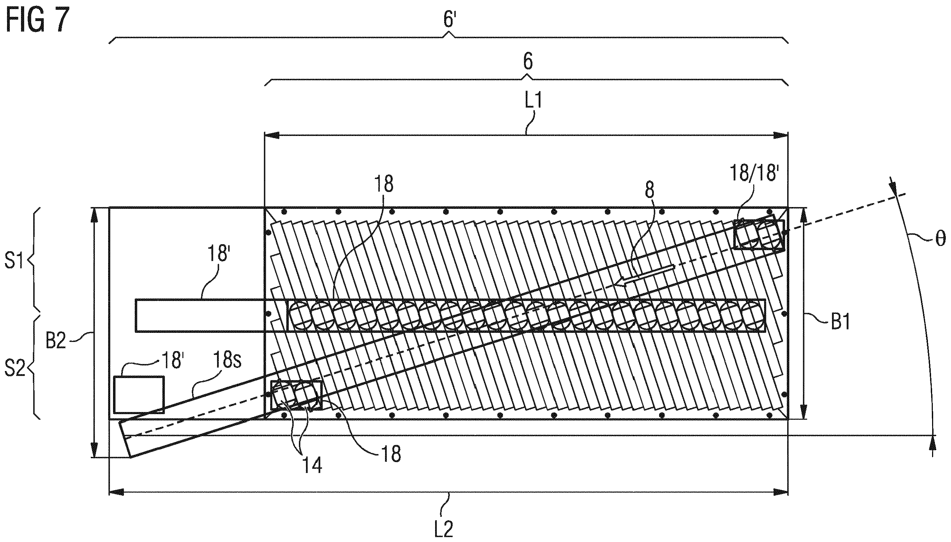

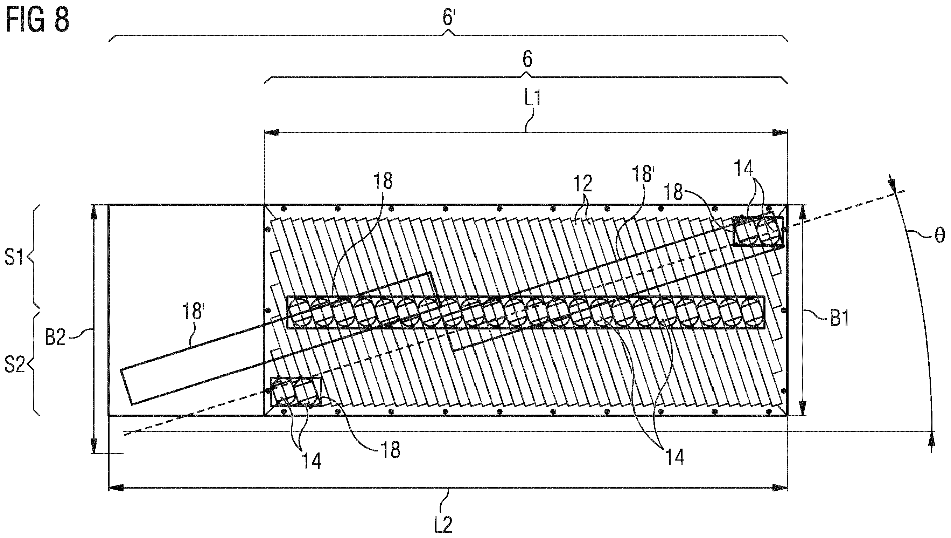

Figuren 7 und 8 illustrieren die durch die Variabilität in der Anordnung der Antriebsrollen 14 ermöglichte Variation in der Länge des Schrägförderstreckenabschnitts 6 hin zu einem neuen, verlängerten Schrägförderstreckenabschnitt 6' im Vergleich zum Stand der Technik. Bei einem Schrägförderer des Standes der Technik kann das Antriebssegment 18s nicht aufgeteilt werden. Beim Stand der Technik muss bei konstantem Schrägwinkel θ stets sowohl die Länge L, als auch die Breite B verändert werden. Wenn nun die Länge eines Schrägförderstreckenabschnitts 6 von L1 auf L2 verlängert werden soll, muss bei herkömmlichen Schrägförderern bei gegebenem Schrägwinkel θ auch die Breite von B1 auf B2 angepasst werden. Mit einem erfindungsgemäßen Schrägförderstreckenabschnitt 6 ist es jedoch möglich, nur die Länge L von L1 zu L2 anzupassen, hierbei aber die Breite B1 konstant zu halten und den Schrägförderstreckenabschnitt 6' zu erhalten. Bei konstantem Schrägwinkel θ kann bei konstanter Breite B1 und konstantem Schrägwinkel θ die Länge L beliebig angepasst werden.

Figur 7 zeigt eine auf dem Schrägförderstreckenabschnitt 6 von Figur 6 aufbauende Möglichkeit der Anordnung der Antriebssegmente 18. Das ursprünglich am Ende und auf der zweiten Seite S2 des Schrägförderstreckenabschnitts 6 positionierte Antriebssegment 18 wird weiter in Flussrichtung verschoben, so dass das Antriebssegment 18' nun am Ende des verlängerten Schrägförderstreckenabschnitts 6' angeordnet ist. Das mittlere Antriebssegment 18' wurde einfach verlängert.

Figur 8 zeigt eine weitere Möglichkeit der Aufteilung, eine mittige Zweiteilung des Antriebssegments 18'.

Selbstverständlich ist es ebenfalls möglich, bei konstanter Länge L und konstantem Schrägwinkel θ die Breite B beliebig anzupassen. Und natürlich auch, bei konstanter Länge L und konstanter Breite B den Schrägwinkel θ beliebig anzupassen. Dies erlaubt eine enorme Flexibilität in der Größengestaltung des Schrägförderstreckenabschnitts 6, der somit individuell auf eine Vielzahl an Fördersystemen 2 anpassbar ist. In einen für den Schrägförderstreckenabschnitt 6 vorgegebenen Rahmen der Länge L und Breite B kann so jeder beliebige Schrägwinkel θ eingestellt werden.

Bei allen Ausführungsform ist eine mechanische Verbindung zwischen den Transportrollen 12 untereinander nicht erforderlich, was eine unkomplizierte Montage und Lagerung erlaubt. Die Antriebsrollen 14 sind in direktem und/oder indirektem Kontakt mit den Transportrollen 12. Möglich ist es, einen antreibbaren Reibgurt zwischen Transportrollen 12 und Antriebsrollen 14 zu positionieren, den sowohl die Transportrollen 12, als auch die Antriebsrollen 14 berühren und der von den Antriebsrollen 14 angetrieben wird.

Dadurch, dass jede Antriebsrolle 14 mit individueller Geschwindigkeit angesteuert werden kann, kann der Schrägförderstreckenabschnitt 6 auch zur Abstandsoptimierung zwischen den Stückgütern 4 herangezogen werden, so dass der Schrägförderstreckenabschnitt 6 neben der seitlichen Förderung noch eine weitere Funktionalität aufweist.

### Bezugszeichenliste

- 2: Fördersystem
- 4: Stückgut
- 6: Schrägförderstreckenabschnitt
- 8: Vorzugstransportrichtung
- 8l: Längskomponente der Vorzugstransportrichtung 8
- 8q: Querkomponente der Vorzugstransportrichtung 8
- 10a: erste Stelle
- 10b: zweite Stelle
- 12: Transportrolle
- 14: Antriebsrolle
- 16: Steuereinheit
- 18: Antriebssegment
- 20: Verbindung Steuereinheit 16 - Antriebsrolle 14
- B: Breite des Schrägförderstreckenabschnitts 6
- L: Länge des Schrägförderstreckenabschnitts 6
- S1: erste Seite des Schrägförderstreckenabschnitts 6
- S2: zweite Seite des Schrägförderstreckenabschnitts 6
- θ: Schrägwinkel

## Patentansprüche

1. Fördersystem (2) zum Transport von Stückgütern (4), umfassend einen Schrägförderstreckenabschnitt (6), wobei
a) der Schrägförderstreckenabschnitt (6) eine erste Seite (S1) und eine zweite Seite (S2) aufweist, wobei die erste und die zweite Seite (S1, S2) einander gegenüberliegen;
b) der Schrägförderstreckenabschnitt (6) eine Vorzugstransportrichtung (8) aufweist, welche eine Längskomponente (8l) entlang den Seiten (S1, S2) und eine Querkomponente (8q) von der ersten Seite (S1) hin zur zweiten Seite (S2) aufweist;
c) der Schrägförderstreckenabschnitt (6) ausgestaltet ist, die Stückgüter (4) stromaufwärts an einer ersten Stelle (10a) auf der ersten Seite (S1) aufzunehmen, entlang der Vorzugstransportrichtung (8) zu transportieren und stromabwärts an einer stromabwärts der ersten Stelle (10a) angeordneten zweiten Stelle (10b) von der zweiten Seite (S2) abzugeben;
d) der Schrägförderstreckenabschnitt (6) Transportrollen (12) und Antriebsrollen (14) umfasst;
e) die Transportrollen (12) hintereinander angeordnet und drehbar gelagert sind;
f) die Antriebsrollen (14) ansteuerbar und antreibbar sind und unterhalb der Transportrollen (12) angeordnet sind, so dass die Transportrollen (12) durch die Antriebsrollen (14) über Reibkontakt antreibbar sind;
g) die Transportrollen (12) schräg auf dem Schrägförderstreckenabschnitt (6) ausgerichtet sind, so dass die Vorzugstransportrichtung (8) des Schrägförderstreckenabschnitts (6) mit einer Vorzugstransportrichtung (8) der Transportrollen (12) übereinstimmt.

2. Fördersystem (2) nach Anspruch 1, **dadurch gekennzeichnet, dass** die Antriebsrollen (14) individuell ansteuerbar und antreibbar ausgestaltet sind.

3. Fördersystem (2) nach einem der Ansprüche 1 bis 2, **dadurch gekennzeichnet, dass**
jede Antriebsrolle (14) einen eigenen Antrieb aufweist.

4. Fördersystem (2) nach Anspruch 3, **dadurch gekennzeichnet, dass** der Antrieb als Rollenmotor ausgestaltet ist.

5. Fördersystem (2) nach einem der Ansprüche 1 bis 4, **dadurch gekennzeichnet, dass**
bezogen auf eine Länge ihrer Drehachsen die Antriebsrollen (14) kürzer ausgestaltet sind als die Transportrollen (12).

6. Fördersystem (2) nach einem der Ansprüche 1 bis 5, **dadurch gekennzeichnet, dass**
die Antriebsrollen (14) einen größeren und/oder kleineren und/oder gleich großen Durchmesser als die Transportrollen (12) aufweisen.

7. Fördersystem (2) nach einem der Ansprüche 1 bis 6, **dadurch gekennzeichnet, dass**
die Antriebsrollen (14) hintereinander und/oder versetzt entlang dem Schrägförderstreckenabschnitt (6) angeordnet sind.

8. Fördersystem (2) nach einem der Ansprüche 1 bis 7, **dadurch gekennzeichnet, dass**
eine Antriebsrolle (14) so angeordnet ist, dass sie sich in Reibkontakt mit zwei Transportrollen (12) befindet.

9. Fördersystem (2) nach einem der Ansprüche 1 bis 8, zudem umfassend
eine Steuereinheit (16), die zur individuellen Ansteuerung der Antriebsrollen (14) ausgestaltet ist.

10. Fördersystem (2) nach einem der Ansprüche 1 bis 9, **dadurch gekennzeichnet, dass**
der Schrägförderstreckenabschnitt (6) im Wesentlichen über seine gesamte Länge und Breite von Transportrollen (12) bedeckt ist.

11. Verfahren zum Transportieren von Stückgütern (4) auf einem Schrägförderstreckenabschnitt (6) eines Fördersystems (2), wobei
- der Schrägförderstreckenabschnitt (6) eine erste Seite (S1) und eine zweite Seite (S2) aufweist, wobei die erste und die zweite Seite (S1, S2) einander gegenüberliegen;
- der Schrägförderstreckenabschnitt (6) eine Vorzugstransportrichtung (8) aufweist, welche eine Längskomponente (8l) entlang den Seiten (S1, S2) und eine Querkomponente (8q) von der ersten Seite (S1) hin zur zweiten Seite (S2) aufweist;
- der Schrägförderstreckenabschnitt (6) Transportrollen (12) und Antriebsrollen (14) umfasst;
- die Transportrollen (12) hintereinander angeordnet und drehbar gelagert sind;
- die Antriebsrollen (14) ansteuerbar und antreibbar sind und unterhalb der Transportrollen (12) angeordnet sind, so dass die Transportrollen (12) durch die Antriebsrollen (14) über Reibkontakt antreibbar sind; und
- die Transportrollen (12) schräg auf dem Schrägförderstreckenabschnitt (6) ausgerichtet sind, so dass die Vorzugstransportrichtung (8) des Schrägförderstreckenabschnitts (6) mit einer Vorzugstransportrichtung (8) der Transportrollen (12) übereinstimmt;
umfassend die Verfahrensschritte:
a) Aufnehmen eines Stückguts (4) stromaufwärts an einer ersten Stelle (10a) des Schrägförderstreckenabschnitts (6) auf der ersten Seite (S1);
b) Transportieren des Stückguts (4) entlang der Vorzugstransportrichtung (8) auf dem Schrägförderstreckenabschnitt (6) ; und
c) Abgeben des Stückguts (4) stromabwärts an einer stromabwärts der ersten Stelle (10a) angeordneten zweiten Stelle (10b) des Schrägförderstreckenabschnitts (6) von der zweiten Seite (S2).

12. Verfahren nach Anspruch 11, **gekennzeichnet durch** individuelles Ansteuern und Antreiben der Antriebsrollen (14) mit voneinander abweichender Geschwindigkeit.

13. Verfahren nach einem der Ansprüche 11 bis 12, **gekennzeichnet durch**
Antreiben von zwei Transportrollen (12) durch Antreiben einer Antriebsrolle (14).

14. Verfahren nach einem der Ansprüche 11 bis 13, **dadurch gekennzeichnet, dass**
die Antriebsrollen (14) hintereinander und/oder versetzt entlang dem Schrägförderstreckenabschnitt (6) angeordnet sind.

15. Verfahren nach einem der Ansprüche 11 bis 14, **gekennzeichnet durch**
Transportieren des Stückguts (4) in frei wählbarer Transportrichtung vor dem Aufnehmen durch den Schrägförderstreckenabschnitt und Transportieren des Stückguts (4) in frei wählbarer Transportrichtung nach dem Abgeben des Stückguts (4) vom Schrägförderstreckenabschnitt.
